**Europäisches Patentamt**

**European Patent Office**

**Office européen des brevets**

(19)

(11) Publication number: **0 035 381**
A1

# EUROPEAN PATENT APPLICATION

(12)

(21) Application number: **81300816.6**

(22) Date of filing: **27.02.81**

(51) Int. Cl.³: **B 60 S 3/04**

(30) Priority: **01.03.80 GB 8007043**

(43) Date of publication of application: **09.09.81**
**Bulletin 81/36**

(84) Designated Contracting States: **AT BE CH DE FR IT LI LU NL SE**

(71) Applicant: **Royston, James Nash, 78, Churchfield Road, Campsall, Nr. Doncaster DN6 9LN (GB)**

(72) Inventor: **Royston, James Nash, 78, Churchfield Road, Campsall, Nr. Doncaster DN6 9LN (GB)**

(74) Representative: **Huntingford, David Ian et al, W.P. THOMPSON & CO. Coopers Building Church Street, Liverpool L1 3AB (GB)**

(54) **Washing of transport vehicles.**

(57)    A plant for washing transport vehicles comprises a station through which a vehicle may be driven, the station including means for spraying washing liquid onto the vehicle (24); means for supplying the washing liquid (18) to the station and control means for the washing liquid supply means.

The essential constituent of the washing liquid is an amphoteric surfactant. The transport vehicle is cleaned by spraying it with the washing liquid whereby dirt on the vehicle is removed or loosened and thereafter the vehicle is preferably sprayed with a rinsing liquid to remove washing liquid and loosened dirt remaining on the vehicle.

- 1 -

<u>DESCRIPTION</u>

<u>WASHING OF TRANSPORT VEHICLES.</u>

This invention relates to the washing of transport vehicles, especially motor cars.

Car wash systems are known in which, as the car is driven through a washing station, water or an aqueous liquid is sprayed on the car and brushes are applied to the outside of the car to remove the dirt therefrom. The brushes may be rotary brushes, resiliently urged into contact with the car as it is driven slowly past the brushes or the brushes are moved over the car, whereby the outside of the car is cleaned. The disadvantages of using brushes are: (1) it is difficult to ensure that the brushes contact the whole of the surface to be cleaned due to the considerable variation in the shape of cars, (2) damage to the cars or to the brush mechanism may result, (3) the moving parts of the brush mechanism require maintenance and (4) the operation of such systems is time consuming on the other hand, a substantial proportion of road dirt on vehicles consists of very fine particles which are so attached to the painted surfaces that they are resistant to high pressure washing without the assistance of brushing.

According to one aspect of the present invention, there is provided an improved washing liquid which can be effectively used to clean transport vehicles without the need to use brushes as well. The washing liquid contains an amphoteric surfactant which preferably carries a negative charge. Preferably the washing liquid also contains at least one of the following; non-ionic surfactants, chelating agents and water soluble silicates e.g. sodium metasilicate. The washing liquid is normally aqueous.

According to another aspect of the invention, a method of washing a transport vehicle comprises spraying the vehicle with the improved washing liquid described above whereby dirt on the vehicle is removed or loosened and thereafter preferably spraying the vehicle with a rinsing liquid to remove washing liquid and loosened dirt remaining on the vehicle. The rinsing liquid may be water but preferably contains a waxing agent, such as a silicone oil, and is preferably an aqueous emulsion thereof. Preferably the rinsing liquid also contains at least one of the following; corrosion inhibitors, cationic surfactants and non-ionic surfactants. The rinsing liquid remaining on the vehicle may be dried or allowed to dry to provide an attractive sheen on the vehicle.

The invention includes apparatus for washing transport vehicles which comprises a station through which a vehicle may be driven, the station including means for spraying (or otherwise applying) the improved washing liquid onto the vehicle; means for supplying the washing liquid to the station and control means for the washing liquid supply means. Preferably the station is a first station and the apparatus also comprises a second station which includes means for spraying the rinsing liquid on to the vehicle, means for supplying the rinsing liquid to the second station and control means for the rinsing liquid supply means. The apparatus may also comprise a third station which includes means for drying the vehicle, for example a warm air blower.

A vehicle scanning device may be located at the approach to the first station to actuate the spraying of washing liquid onto a vehicle passing the scanning device and entering the station. The spraying of rinsing liquid onto the vehicle at the second station may be actuated by a time delay following the spraying of the washing liquid, the time delay being sufficient to enable the vehicle to reach the second station after completion of the spraying of the washing liquid at the first station.

In a preferrred and specific apparatus according to the invention, the first and second stations take the form of arches carrying jets for spraying liquid onto cars driven under the arches. Two liquid storage tanks containing washing liquid and rinsing liquid respectively are connected by pipelines to the jets of the first and second arches respectively. Pumps are provided to cause the liquids to flow from their respective tanks through the pipelines to the jets and valves are provided to control the flow. The starting and stopping of the pumps and the opening and closing of the valves is electrically controlled by a solid state logic system which is actuated by an inductive sensor mounted in the ground in front of the first arch in the path of approaching vehicles. The logic system, together with the liquid storage tanks, pumps and valves (such as solenoid valves) may be located in a control unit provided also with a control panel. If the tanks contain concentrated liquid, a water supply for diluting the concentrate is also required.

The arches may be provided with direction signs for vehicle drivers, the signs being operated, for example by being illuminated from a control unit. Thus the first arch may be provided with the sign "WAIT" and "ENTER NOW/close windows" and the second arch may be provided with the sign "WAIT" and "DRIVE SLOWLY". A typical sequence of operation of the preferred apparatus described above is as follows:

When the first arch displays the sign "ENTER NOW", a car to be cleaned is driven over the inductive sensor set in the ground on the approach to the first arch to give fully automatic length detection of any vehicle and the sensor triggers off the logic system in the control unit. The logic system opens the washing liquid control valve and starts the pump for delivering washing liquid from its storage tank through the pipeline to the jets, such as fan jets, disposed around the first arch. The jets spray the car as it passes through the first arch, but thereafter the pump stops and the valve closes. Once the car has entered the first arch, the arch will display the "WAIT" sign to prevent another vehicle following too soon through the arches.

When the car leaves the first arch, the second arch will be displaying the "WAIT" sign but after say 30 seconds, the sign will change to "DRIVE SLOWLY" and the control unit will open the rinsing liquid control valve and start the pump to deliver rinsing liquid from its storage tank through the pipeline to the jets around the second arch. The jets spray the car as it passes through the second arch but thereafter the pump stops and the valve closes. When the car has cleared the second arch, the control unit resets the first arch sign to "ENTER NOW" to allow the next vehicle to proceeed through the arches. The pumps used should be sufficient to provide jet pressures of 500 to 1000 PSI.

The shape of the arches is not critical and may conveniently be rectangular. The bases of the arches may if desired be fixed in the ground but alternatively the arches may be provided with feet (e.g. foot plate mountings) to enable them to stand on the ground but be readily moveable to any desired position. The jets will normally (but not necessarily) be directed inwardly in the plane of the arch. This ensures adequate washing or rinsing of the sides and top of the car or other vehicle but additional jets may be provided suitably directed to wash or rinse the front and back of the vehicle. Such additional jets may be provided on a vertically adjustable boom mounted on the arch. The jets on the booms may be supplied with liquid through flexible pipes.

Preferably the washing and rinsing liquid storage tanks may contain concentrated liquid and this liquid may be injected into water to dilute it before spraying. A venturi system may be used for the injection and the degree of dilution may be controlled by an adjustable metering valve which may be made of polyvinyl chloride. The valve may be provided with an orifice such that the diluted liquid contains from $\frac{1}{2}\%$ to 3% by weight of the concentrated liquid. Suitable proportions of the constituents of the concentrated liquids are illustrated in the following examples; wherein the percentages and parts are by weight.

WASHING LIQUID CONCENTRATE (fully biodegradable)

| | |
|---|---|
| Sodium Metasilicate | 12% |
| Amphoteric Surfactant<br>( see below ) | 12% |
| Non-ionic Surfactant<br>( see below ) | 5% |
| Chelating agent<br>(Ethylene diamine tetra-acetic acid) | 10% |
| Water | Balance |

This concentrate which has a PH of about 14, may be diluted for spraying in the ratio of 1 part of concentrate to 100 parts of water. The amphoteric surfactant is cocoimidazolinium dicarboxylate (AMHOLAC XCE) and the non-ionic surfactant is a polyoxyethylene surfactant (NONIDET LE) made by reacting a $C_{12}$ alcohol ethoxylate with 6 to 9 moles of ethylene oxide.

RINSING LIQUID CONCENTRATE.

| | |
|---|---|
| Silicone Oil | 2.5% |
| Rust Inhibitor | 0.5% |
| Cationic Surfactant<br>(contain tertiary amine salt at 8%) | 10.0% |
| Alcohol Ethoxylate<br>(Non-ionic Surfactant) | 15% |
| Water | Balance |

This concentrate may be diluted for spraying within the ratios of water to concentrate of 200:1 to 100:1 .

It is believed that the amphoteric surfactant in the washing liquid neutralises electrostatic charges holding the fine dirt particles to the surface of the vehicle and enables the particles to be rinsed off. The rinsing liquid applied as a final rinse and dried or left to dry will leave an attractive sheen on the vehicle and, when it contains a corrosion inhibitor, will give added protection against atmospheric corrosion between washes. It also facilitates the cleaning of surfaces already pitted by corrosion marks.

The dimensions of the apparatus and the materials used in its construction are not critical. The arches should be large enough to allow the vehicles to be washed to pass through them. Typical dimensions for the arches are 6ft in height and 7th 6ins in width. Suitable materials for use in the apparatus are as follows.

| Arches | Steel extrusion |
| Pipework, washing arch | ABS plastics |
| Pipework, rinsing arch | Galvanised steel |
| Jets, washing arch | Stainless steel |
| Jets, rinsing arch | Brass |
| Pumps | Stainless steel impellors and a carbide steel seal enclosed in fine grain cast iron |

- 9 -

| Solenoid valves (washing arch) | polyvinyl chloride |
| Metering valves | Brass or polyvinyl chloride |

In general the dimensions of the apparatus may conveniently be sufficient to allow the use of about 34 gallons of washing liquid per wash and the washing of approximately 40 vehicles per hour. The pump capacity may be 20 gallons per minute.

The invention will be still further described by way of example with reference to the accompanying drawings in which:-

Fig. 1 is a schematic plan view of an apparatus for washing cars,and

Fig. 2 is a schematic end elevation of the washing arch shown in Fig. 1.

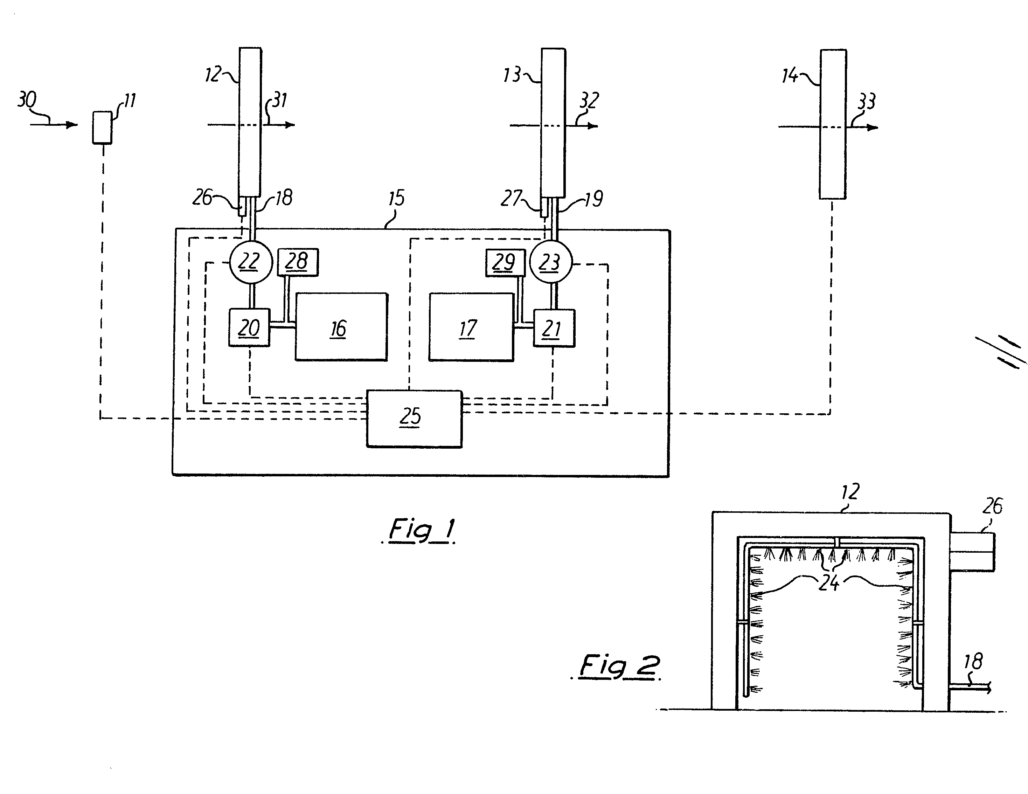

In Fig. 1, an inductive sensor 11 is set in the ground at the approach to a washing arch 12 in series with a rinsing arch 13 and a drying unit 14 in the form of an air blower. A control unit 15 for the apparatus contains a tank 16 for washing liquid and a tank 17 for rinsing liquid. The tanks 16,17 are arranged to supply liquid to the arches 12, 13 respectively through pipelines 18,19 (respectively) in which are located pumps 20, 21 (respectively) and solenoid valves 22,23 (respectively).

As may be seen from Fig. 2, the pipeline 18 is secured to the inside of the arch 12 and is provided with jets 24 for spraying washing liquid onto cars passing through the arch. The pipeline 19 is similarly secured to the arch 13 and provided with jets for spraying rinsing liquid (not shown).

The control unit 15 includes a solid state logic system 25 electrically connected (as indicated by the dotted lines) to the inductive sensor, pumps, valves and drying unit and also to direction signs 26,27 carried by the arches 12, 13 respectively.

Tanks 28,29 are arranged to dilute the washing and rinsing liquids as they flow through the pipelines 18 and 19 by supplying water to the pipelines through metering valves (not shown).

Arrows 30 to 33 indicate the path of a car over the inductive sensor, through the washing and rinsing arches and under the drying unit. The passage of a car over the inductive sensor actuates the logic system, which in turn operates the pumps, valves and direction signs in the sequence described more fully above in relation to the preferred apparatus.

The present invention in its preferred form provides a brushless washing plant enabling cars of any description or shape to be effectively washed in 15 to 60 seconds.

The plant is time saving and because of the composition of the washing liquid is a completely brushless system. The preferred plant is automatic and requires no manual labour or plant operator to operate it. There are also no moving parts employed around the vehicle whilst washing is in progress and hence mechanical damage to the vehicle is avoided.

0035381

## CLAIMS

1. A method of washing a transport vehicle which comprises spraying the vehicle with a washing liquid comprising an amphoteric surfactant whereby dirt on the vehicle is removed or loosened.

2. A method as claimed in claim 1, in which thereafter the vehicle is sprayed with a rinsing liquid to remove washing liquid and loosened dirt remaining on the vehicle.

3. A method as claimed in claim 1 or 2 in which the washing liquid is aqueous.

4. A method as claimed in any one of claims 1 to 3, in which the amphoteric surfactant carries a negative charge.

5. A method as claimed in any one of claims 1 to 4, in which the washing liquid also contains at least one of the following: non-ionic surfactants, chelating agents and water-soluble silicates.

6. A method as claimed in any one of claims 2 to 5, in which the rinsing liquid is water.

7. A method as claimed in claim 6, in which rinsing liquid is an aqueous emulsion of a waxing agent.

8. A method as claimed in claim 7, in which the rinsing liquid also contains at least one of the following: corrosion inhibitors, cationic surfactants and anionic surfactants.

9. Apparatus for washing transport vehicles which comprises a station through which a vehicle may be driven, the station including means for spraying or otherwise applying a washing liquid onto the vehicle; means for supplying the washing liquid to the station and control means for the washing liquid supply means.

10. Apparatus as claimed in claim 9, in which the station is a first station and the apparatus further comprises a second station which includes means for spraying a rinsing liquid onto the vehicle, means for supplying the rinsing liquid to the second station and control means for the rinsing liquid supply means.

11. Apparatus as claimed in claim 10, which also comprises a third station which includes means for drying the vehicle.

12. Apparatus as claimed in any one of claims 9 to 11, in which a vehicle scanning device is located at the approach to the station or first station to actuate the spraying of washing liquid onto a vehicle passing the scanning device and entering the station.

13. Apparatus as claimed in any one of claims 10 to 12, in which the spraying of rinsing liquid onto the vehicle at the second station is arranged to be actuated by a time delay means following the spraying of the washing liquid, the time delay being sufficient to enable the vehicle to reach the second station after completion of the spraying of the washing liquid at the first station.

14. Apparatus as claimed in any one of claims 10 to 13 in which the first and second stations take the form of first and second arches respectively carrying jets for spraying liquid onto vehicles driven under the arches.

15. Apparatus as claimed in claim 14 and having two liquid storage tanks for washing liquid and rinsing liquid respectively connected by pipelines to the jets of the first and second arches respectively.

16. Apparatus as claimed in claim 15 and having pumps to cause liquids to flow from their respective tanks through the pipelines to the jets, valves being provided to control the flow.

17. Apparatus as claimed in claim 16 and having a solid state logic system arranged for electrical control of the starting and stopping of the pumps and opening and closing of the valves, the logic system being arranged to be actuated by an inductive sensor mounted in the ground in front of the first arch in the path of approaching vehicles.

18. Apparatus as claimed in claim 17, in which the arches are provided with direction signs for vehicle drivers, the signs being operable from a control unit in relation to the starting and stopping of the pumps.

19. Apparatus as claimed in any one of claims 14 to 18, in which the jets are directed inwardly in the plane of the arch to spray the sides and top of the vehicle.

20. Apparatus as claimed in claim 19 in which additional jets are provided and are directed to spray the front and back of the vehicle.

21. Apparatus as claimed in any one of claims 15 to 20, in which means are provided to dilute liquid from the storage tanks before it reaches the jets.

22. A washing liquid for cleaning transport vehicles, comprising an amphoteric surfactant and at least one of the following: non-ionic surfactants, chelating agents and water-soluble silicates.

23. A washing liquid as claimed in claim 22 which is aqueous.

24. A washing liquid as claimed in claim 22 or claim 23, in which the amphoteric surfactant carries a negative charge.

_Fig_1_

_Fig_2_

0035381

European Patent
Office

**EUROPEAN SEARCH REPORT**

0035381
Application number

EP 81 30 0816.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| | DE - A1 - 2 359 743 (H. STÖCKER, CHEM. FABRIK)<br>* claims 2 and 6; page 2 * | 1-3,5, 6,22, 23 | B 60 S   3/04 |
| | -- | | |
| | GB - A - 1 407 894 (ULTRA DYNAMICS CORP.)<br>* page 5, lines 100 and 102; page 4, lines 5 to 9 * | 1,4,7 | |
| | -- | | **TECHNICAL FIELDS SEARCHED** (Int. Cl.3) |
| | GB - A - 1 560 890 (BRENT CHEMICALS INTERNATIONAL)<br>* claim 1; fig. * | 9,10, 12-14, 17-19 | B 60 S   3/00 |
| | -- | | |
| | US - A - 3 409 030 (A.P. SCHMIDT)<br>* fig. 1 * | 11,14 | |
| | -- | | |
| | US - A - 3 578 001 (T.J. ATTAWAY)<br>* fig. 1 * | 16,21 | |
| | -- | | |
| | GB - A - 1 534 103 (BRENT CHEMICALS INTERNATIONAL)<br>* fig. 1 * | 20 | |
| | ---- | | |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search<br>Berlin | Date of completion of the search<br>28-04-1981 | Examiner<br>BECKER | |